# EUROPÄISCHE PATENTANMELDUNG

(11) **EP 1 089 210 A1**
(43) Veröffentlichungstag der Anmeldung: **04.04.2001**
(21) Anmeldenummer: 99810886.4
(22) Anmeldetag: 30.09.1999
(51) Int. Cl.: G06F 17/60

(54) **Verfahren und geeignete Vorrichtung für die Verbreitung von Werbeinformationen**

(71) Anmelder: Swisscom AG, 3000 Bern 29 (CH)
(72) Erfinder: Ruggiano, Ernesto, 3013 Bern (CH); Zweiacker, Marc, 4563 Gerlafingen (CH)
(74) Vertreter: BOVARD AG - Patentanwälte

(57) **Zusammenfassung**

Verfahren und eine dafür geeignete Dienstzentrale (140) sowie ein Softwareobjekt-Los (200) für die Verbreitung von Werbeinformationen (203) über Telekommunikationsnetze (130), wobei Softwareobjekt-Lose (200), welche mindestens eine eindeutige Losidentifizierung (201) und einen dieser Losidentifizierung (201) zugeordneten Losinhalt (202) mit Werbeinformationen (203) und Gewinnangaben (204) umfassen, über ein Telekommunikationsnetz (130) und über mit dem Telekommunikationsnetz (130) verbundene Kommunikationsendgeräte (110, 120) für mindestens gewisse Benutzer dieser Kommunikationsendgeräte (110, 120) verfügbar gemacht werden, wobei die Benutzer mittels Eingabemitteln (112, 122) eines dieser Kommunikationsendgeräte (110, 120) ihr Interesse bekunden, sich den Losinhalt (202) eines ihnen verfügbaren Softwareobjekt-Loses (200) präsentieren zu lassen, bevor ihnen der Losinhalt (202) des betreffenden Softwareobjekt-Loses (200) mittels Ausgabemitteln (111, 121) des Kommunikationsendgeräts (110, 120) präsentiert wird.

## Beschreibung

Die vorliegende Erfindung betrifft ein Verfahren und eine geeignete Vorrichtung für die Verbreitung von Werbeinformationen. Insbesondere betrifft die vorliegende Erfindung ein Verfahren und eine geeignete Vorrichtung für die Verbreitung von Werbeinformationen über Telekommunikationsnetze.

Für die Verbreitung von Werbeinformationen über Telekommunikationsnetze ist neben der Verbreitung mittels elektronischer Post (Electronic Mail, E-Mail) vor allem auch die Verbreitung im Internet über Internet-Seiten (Web-Pages) bekannt. Üblicherweise werden für die Verbreitung von Werbeinformationen auf einer Web-Page Zonen reserviert, sogenannte Banners, in welchen die Werbeinformationen beispielsweise als Text- und/oder als Bild, eventuell in animierter Form, dargestellt werden.

Da das Plazieren von Werbeinformationen im Internet eine gewinnbringende Dienstleistung darstellt, gibt es immer mehr Dienstanbieter, die sich den Markt streitig machen. Um Werbeinformationen effizient zu verbreiten, ist es folglich von Vorteil, wenn sie in einer Form verbreitet werden, die sich von anderen Formen der Verbreitung von Werbeinformationen hervorhebt.

Es ist eine Aufgabe dieser Erfindung, ein neues und besseres Verfahren sowie eine dafür geeignete Vorrichtung vorzuschlagen, welche es ermöglichen, Werbeinformationen über Telekommunikationsnetze so zu verbreiten, dass sie vermehrt zur Kenntnis genommen werden.

Gemäss der vorliegenden Erfindung wird dieses Ziel insbesondere durch die Elemente der unabhängigen Ansprüche erreicht. Weitere vorteilhafte Ausführungsformen gehen ausserdem aus den abhängigen Ansprüchen und der Beschreibung hervor.

Dieses Ziel wird durch die vorliegende Erfindung insbesondere dadurch erreicht, dass für die Verbreitung von Werbeinformationen über Telekommunikationsnetze, Softwareobjekt-Lose, die mindestens eine eindeutige Losidentifizierung und einen dieser Losidentifizierung zugeordneten Losinhalt umfassen, wobei der Losinhalt mindestens Werbeinformationen und Angaben über einen Losgewinn enthält, über ein Telekommunikationsnetz und über mit dem Telekommunikationsnetz verbundene Kommunikationsendgeräte für mindestens gewisse Benutzer dieser Kommunikationsendgeräte verfügbar gemacht werden, beispielsweise festinstallierte oder mobile Computer oder Mobilfunktelefone mit Zugriff auf das Internet, dass solche Benutzer ihr Interesse bekunden, sich den Losinhalt eines ihnen verfügbaren Softwareobjekt-Loses präsentieren zu lassen, indem sie diese Interessensbekundung mittels Eingabemitteln eines dieser Kommunikationsendgeräte eingeben, und dass der Losinhalt dieses Softwareobjekt-Loses dem interessierten Benutzer mittels Ausgabemitteln des für die Interessensbekundung benützten Kommunikationsendgeräts präsentiert wird. Die Kombination von Werbeinformationen mit einem Los hat den Vorteil, dass durch die Gewinnchancen des Loses ein zusätzlicher Anreiz geschaffen wird, die Werbeinformation zu beachten. Da die Werbeinformationen einem interessierten Benutzer erst dann präsentiert werden, wenn er sein Interesse dafür bekundet hat, ist es zudem möglich, quantitative Angaben über die Anzahl Benutzer zu machen, die die Werbeinformationen beachtet haben.

In einer bevorzugten Ausführungsvariante werden die interessierten Benutzer mittels der Ausgabemittel aufgefordert, bestimmte Benutzerdaten einzugeben, und danach werden die von einem betreffenden Benutzer mittels der Eingabemittel eingegebenen Benutzerdaten entgegengenommen. Das Anfordern und Entgegennehmen von Benutzerdaten macht es möglich Angaben zu erfassen, die es erlauben den betreffenden Benutzer zu identifizieren und/oder zu adressieren, und/oder dem betreffenden Benutzer Fragen zu stellen, zum Beispiel eine Kontrollfrage, welche zum Beispiel die präsentierten Werbeinformationen betrifft und vom betreffenden Benutzer entsprechende Antworten entgegenzunehmen.

In einer bevorzugten Ausführungsvariante werden Einlösebelege generiert, die jeweils mindestens die Losidentifizierung des betreffenden Softwareobjekt-Loses enthalten, und diese Einlösebelege über das Telekommunikationsnetz an eine im betreffenden Softwareobjekt-Los spezifizierte Dienstzentrale übermittelt. Die Übermittlung von Einlösebelege an eine definierte Dienstzentrale ermöglicht die Kontrolle darüber, wie viele Softwareobjekt-Lose und insbesondere welche Werbeinformationen von interessierten Benutzern beachtet wurden, wobei Softwareobjekt-Lose beispielsweise entwertet werden können, wenn deren Losidentifizierung in einem Einlösebeleg empfangen wurde.

In einer bevorzugten Ausführungsvariante werden beim Generieren von Einlösebelegen mindestens gewisse Benützerdaten in den Einlösebeleg eingefügt. Die Übermittlung von Benutzerdaten im Einlösebeleg an die Dienstzentrale macht es möglich dort die oben erwähnten Angaben zur Identifizierung und/oder Adressierung des Benutzers beispielsweise bei der Zustellung eines eventuellen Losgewinns zu benützen und/oder gegebenenfalls vom Benutzer auf gestellte Fragen eingegebene Antworten auszuwerten.

In einer bevorzugten Ausführungsvariante werden nach dem Entgegennehmen von Benutzerdaten mindestens gewisse der entgegengenommenen Benutzerdaten mit Daten verglichen, die im Softwareobjekt-Los enthalten sind. Dadurch kann beispielsweise die Antwort auf eine gestellte Kontrollfrage direkt im Kommunikationsendgerät des Benutzers geprüft werden, ohne dass dazu die Dienstzentrale miteinbezogen werden muss.

An dieser Stelle soll erwähnt werden, dass sich die vorliegende Erfindung auch auf ein Softwareobjekt-Los bezieht, welches Softwareobjekt-Los mindestens eine eindeutige Losidentifizierung und einen dieser Losidentifizierung zugeordneten Losinhalt umfasst, wobei der Losinhalt mindestens Werbeinformationen und Angaben über einen Losgewinn enthält, und welches Softwareobjekt-Los Computerprogrammcodemittel umfasst, um einen Prozessor in einem Kommunikationsendgerät, das über ein Telekommunikationsnetz kommunizieren kann, so zu steuern, dass er den Losinhalt einem Benutzer des Kommunikationsendgeräts mittels Ausgabemitteln des Kommunikationsendgeräts präsentiert, wenn der Benutzer mittels Eingabemitteln des Kommunikationsendgeräts Interesse bekundet hat, sich den Losinhalt des Softwareobjekt-Loses präsentieren zu lassen. Der Vorteil eines solchen Softwareobjekt-Loses, welches als digitales File mit Daten und Programmcode, beispielsweise in Java (Java ist ein geschütztes Warenzeichen von Sun Microsystems), ausgestaltet wird, besteht insbesondere darin, dass es in herkömmlicher Weise über Telekommunikationsnetze, beispielsweise das Internet, auf welches über Festnetze oder Mobilfunknetze zugegriffen wird, und über in diesen Telekommunikationsnetzen kommunizierende Kommunikationsendgeräte verbreitet und der enthaltene Programmcode auf einem Prozessor des Kommunikationsendgeräts ausgeführt werden kann, beispielsweise ein kommunikationsfähiger Computer (Personal Computer, Laptop-Computer, Palmtop-Computer) oder ein Mobilfunktelefon.

In weiteren bevorzugten Ausführungsvarianten umfasst das Softwareobjekt-Los zusätzliche Computerprogrammcodemittel, gemäss den abhängigen Ansprüchen 8 bis 11.

Die vorliegende Erfindung bezieht sich auch auf eine Dienstzentrale gemäss einem der Ansprüche 12 oder 13.

Nachfolgend wird eine Ausführung der vorliegenden Erfindung anhand eines Beispieles beschrieben. Das Beispiel der Ausführung wird durch folgende beigelegten Figuren illustriert:

Figur 1 zeigt ein Blockdiagramm mit einer schematischen Darstellung eines Telekommunikationsnetzes, über welches Kommunikationsendgeräte mit einer Dienstzentrale kommunizieren.

Figur 2a zeigt ein Blockdiagramm eines Softwareobjekt-Loses.

Figur 2b zeigt schematisch eine visuelle Präsentation eines (ungeöffneten) Softwareobjekt-Loses.

Figur 2c zeigt schematisch eine visuelle Präsentation des Losinhalts eines Softwareobjekt-Loses.

Figur 3 zeigt ein Flussdiagramm welches den möglichen Verlauf des Verfahrens zur Verbreitung von Werbeinformationen illustriert.

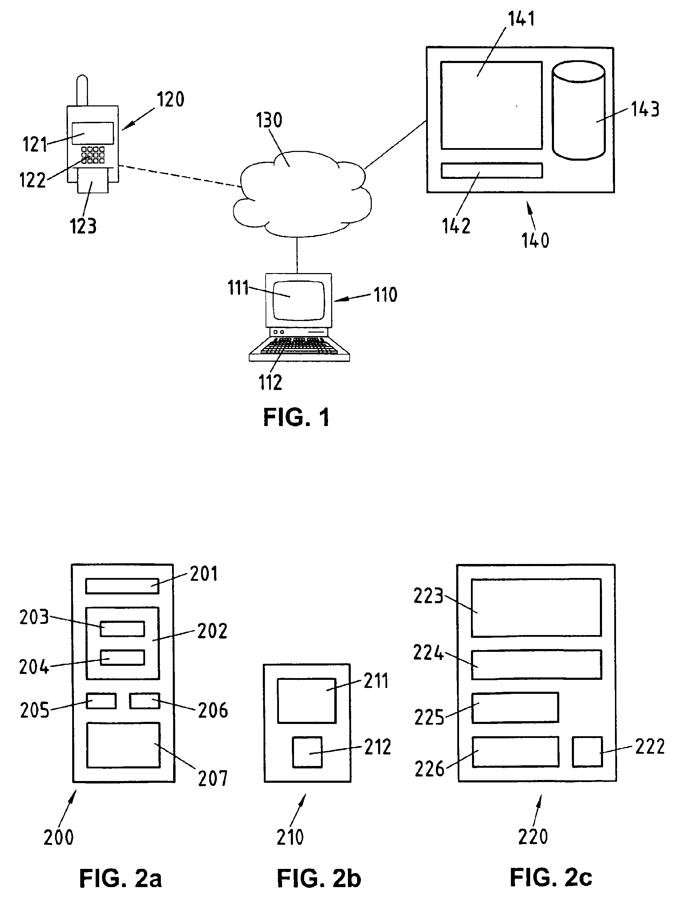

In der Figur 1 bezieht sich die Bezugsziffer 140 auf eine Dienstzentrale, welche beispielsweise einen handelsüblichen Kommunikations-Server umfasst und mittels diesem Kommunikations-Server über ein Telekommunikationsnetz 130 mit Kommunikationsendgeräten 110, 120 kommunizieren, das heisst Daten austauschen kann. Das Telekommunikationsnetz 130 ist beispielsweise das weltweite Internet, mit welchem die Kommunikationsendgeräte 110, 120 beispielsweise über Dienstanbieter verbunden sind. Die Kommunikationsendgeräte sind beispielsweise festinstallierte Personal Computers 110 oder mobile Laptop- oder Palmtop-Computers, die über einen Festnetzanschluss, beispielsweise das öffentliche geschaltete Telefonnetz oder ein ISDN-Netz (Integrated Services Digital Network), oder über ein Mobilfunknetz mit dem Telekommunikationsnetz 130 verbunden sind. Insbesondere Kommunikationsendgeräte in der Form eines Mobilfunktelefons 120 sind, wie in der Figur 1 durch die gestrichelte Linie angedeutet wird, über ein Mobilfunknetz, beispielsweise ein GSM- oder UMTS-Netz, mit dem Telekommunikationsnetz 130 verbunden.

Die Dienstzentrale 140 verfügt über Computerprogrammcodemittel 141, um einen Prozessor 142 der Dienstzentrale 140 so zu steuern, dass dieser Schritte gemäss den nachfolgenden Erläuterungen ausführt. Der Prozessor 142 befindet sich beispielsweise im oben erwähnten Kommunikations-Server oder in einem anderen zusätzlichen Computer der Dienstzentrale 140. Die Dienstzentrale 140 umfasst zudem eine Datenbank 143, welche ebenfalls auf dem Kommunikations-Server oder auf einem anderen zusätzlichen Computer implementiert ist.

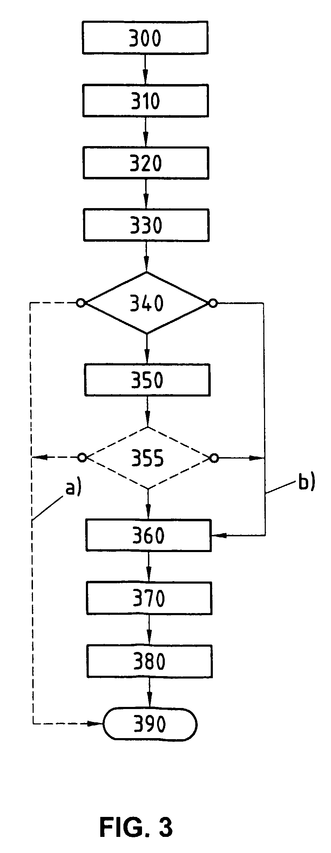

Gemäss dem in der Figur 3 dargestellten Flussdiagramm werden im Schritt 300 durch die Computerprogrammcodemittel 141 in der Dienstzentrale 140 Softwareobjekt-Lose generiert, die in den folgenden Abschnitten näher beschrieben werden.

An dieser Stelle soll erwähnt werden, dass mit dem Begriff Computerprogrammcodemittel jeweils programmierte Softwaremodule gemeint sind, die gegebenenfalls in Kooperation mit einem Betriebssystem auf einem Prozessor ausgeführt werden und dabei diesen Prozessor so steuern, dass er dabei die den betreffenden Computerprogrammcodemittel eigenen Schritte ausführt.

In der Figur 2a wird ein Softwareobjekt-Los 200 schematisch in einem Blockdiagramm dargestellt. Das Softwareobjekt-Los 200 ist ein digitales File und umfasst eine eindeutige Losidentifizierung 201, welche beispielsweise mittels einer digitalen Signatur des Betreibers der Dienstzentrale 140 versehen ist oder in Form eines entsprechenden Zertifikats ausgeführt ist, so dass das Softwareobjekt-Los 200 eindeutig identifiziert und die Dienstzentrale 140, respektive der Betreiber der Dienstzentrale 140, als Quelle authenifiziert werden kann. Das Softwareobjekt-Los 200 umfasst zudem einen Losinhalt 202, welcher Werbeinformationen 203 und Angaben 204 über den Losgewinn des betreffenden Softwareobjekt-Loses 200 enthält. Die Werbeinformationen 203 können in der Form von Text- und/oder Bildinformationen und/oder auch in animierter Form, beispielsweise als Video oder mit entsprechenden Computerprogrammcodemitteln, im Softwareobjekt-Los enthalten sein. Die Angaben 204 über den Losgewinn spezifizieren den Gewinn, der mit dem betreffenden Softwareobjekt-Los 200 gewonnen werden kann, wobei diese Angabe 204 auch aussagen kann, dass das betreffende Softwareobjekt-Los 200 keinen Gewinn erzielt. In einer Ausführungsvariante enthält das Softwareobjekt-Los 200 vordefinierte Daten 205, beispielsweise in verschlüsselter Form, die zum Beispiel mit vom Benutzer eingegebenen Benutzerdaten verglichen werden können. In einer Ausführungsvariante enthält das Softwareobjekt-Los 200 Angaben 206 betreffend die Dienstzentrale 140, beispielsweise Angaben, die es erlauben die Dienstzentrale 140 über das Telekommunikationsnetz 130 zu adressieren. Das Softwareobjekt-Los enthält zudem Computerprogrammcodemittel 207, die auf einem Prozessor der Kommunikationsendgeräte 110, 120 ausgeführt werden können, um diesen Prozessor wie nachfolgend beschrieben wird zu steuern.

Bei der Generierung von Softwareobjekt-Losen im Schritt 300 werden durch die Computerprogrammcodemittel 141 der Dienstzentrale 140 Verknüpfungen von Losidentifizierungen 201 mit zugeordneten Werbeinformationen 203 und Angaben über zugeordnete Losgewinne 204 in der Datenbank 143 gespeichert. Die Datenbank 143 enthält folglich eine logische Verknüpfung zwischen Losidentifizierungen 201, Angaben über Losgewinne 204 und eine oder mehrere Werbebotschaften.

Gemäss der Figur 3 werden die im Schritt 300 generierten Softwareobjekt-Lose 200 im Schritt 310 durch die Computerprogrammcodemittel 141 der Dienstzentrale 140 über das Telekommunikationsnetz 130 für die Benutzer der Kommunikationsendgeräte 110, 120 über diese betreffenden Kommunikationsendgeräte 110, 120 verfügbar gemacht. Zu diesem Zweck kann ein Softwareobjekt-Los mittels elektronischer Post (E-Mail) an die Benutzer der Kommunikationsendgeräte 110, 120 übermittelt werden oder auf dem Kommunikations-Server der Dienstzentrale 140 für die Benutzer der Kommunikationsendgeräte 110, 120 über das Telekommunikationsnetz 130 zugänglich gemacht werden. Im letzteren Fall kann dies beispielsweise durch die Erstellung einer Internet-Seite (Web-Page) auf dem Kommunikations-Server der Dienstzentrale 140 erreicht werden, auf welcher Internet-Seite ein Softwareobjekt-Los 200 beispielsweise als grafisches Objekt 210 visuell repräsentiert wird. Die visuelle Repräsentation eines verfügbaren Softwareobjekt-Loses 210 auf einer Internet-Seite kann vom Benutzer mittels dazu geeigneten Browsern aufgefunden werden, welche auf den betreffenden Kommunikationsendgeräten 110, 120, ausgeführt werden. An dieser Stelle sollte auch erwähnt werden, dass Softwareobjekt-Lose auch auf Internet-Seiten angebracht werden können, die einem Benutzer eine persönliche Sicht ermöglichen, so dass jeweils nur ein betreffender Benutzer Sicht auf ein bestimmtes Softwareobjekt-Los 200 hat. In einer Ausführungsvariante werden die Softwareobjekt-Lose 200, insbesondere im Falle der Übermittlung per E-Mail und im Falle der persönlichen Sicht auf Internet-Seiten, ausschliesslich solchen Benutzern verfügbar gemacht, die sich für Softwareobjekt-Lose 200 registriert haben, beispielsweise bei einem Betreiber des Telekommunikationsnetzes 130, oder die durch einen Zufallsprozess bestimmt wurden, beispielsweise aus einer Liste von Abonnenten eines Betreibers des Telekommunikationsnetzes 130.

Eine mögliche visuelle Darstellung eines verfügbaren Softwareobjekt-Loses 210 ist in der Figur 2b dargestellt. Wie die Figur 2b illustriert, wird dem Benutzer nicht der eigentliche Losinhalt 202 sondern nur ein grafisches Objekt gezeigt, welches beispielsweise in einer Zone 211 mittels Textinformationen oder grafischen Symbolen auf die Tatsache hinweist, dass es sich beim betreffenden grafischen Objekt um ein Softwareobjekt-Los handelt und den Benutzer instruiert, wie er mit diesem Softwareobjekt-Los umzugehen hat. Das grafische Objekt 210 präsentiert das Softwareobjekt-Los 200 in ungeöffneter Form, das heisst ohne den Losinhalt 202 zu präsentieren.

Gemäss dem Schritt 320 der Figur 3 muss ein Benutzer aktiv sein Interesse bekunden, sich den Losinhalt des Softwareobjekt-Loses präsentieren zu lassen, das heisst das Softwareobjekt-Los zu öffnen, wenn er Interesse daran hat, den eigentlichen Losinhalt kennenzulernen. Gemäss den in der Zone 211 gegebenen Instruktionen kann der Benutzer beispielsweise das grafische Objekt, das das Softwareobjekt-Los präsentiert, anklicken oder in einer Ausführungsvariante ein für diesen Zweck auf dem grafischen Objekt 210 angebrachtes grafisches Bedienungselement 212 betätigen. Der Fachmann wird verstehen, dass es weitere Möglichkeiten gibt, diese Interessensbekundung vom Benutzer entgegenzunehmen, wobei hier insbesondere sprachgesteuerte Befehle oder vordefinierte Tasten, respektive Tastenkombinationen, erwähnt werden sollen. Falls die grafischen Objekte 210, mittels welchen den Benutzern Softwareobjekt-Lose 200 verfügbar gemacht werden, für mehrere Benutzer zugänglich sind, kann verhindert werden, das mehrere Benutzer Zugriff auf das selbe Softwareobjekt-Los 200 haben, indem beispielsweise ein bestimmtes Softwareobjekt-Los 200 oder die Losidentifizierung 201 und mindestens die Angaben über den Losgewinn 204 erst dann an das Kommunikationsendgerät 110, 120 eines Benutzers übermittelt werden, wenn dieser betreffende Benutzer sein Interesse bekundet hat, sich den Losinhalt des Softwareobjekt-Loses präsentieren zu lassen. Für diesen letzteren Fall verfügt das grafische Objekt 210 mit der visuellen Darstellung eines Softwareobjekt-Loses, respektive das Softwareobjekt-Los 200, über entsprechende Computerprogrammcodemittel um die Übermittlung eines bestimmten Softwareobjekt-Loses 200, respektive einer Losidentifizierung 201 und den zugehörigen Angaben über den Losgewinn 204, zu initiieren und auszuführen. Der Fachmann wird verstehen, dass es verschiedene Möglichkeiten gibt, die Abfolge der Generierung, Verfügbarmachung, Anforderung, Übermittlung und Einlösung von Softwareobjekt-Losen auszuführen, ohne dabei von der Lehre der vorliegenden Erfindung abzuweichen.

Wenn ein Benutzer im Schritt 320 durch entsprechende Eingaben über die Bedienungselemente 112, 122 des betreffenden Kommunikationsendgeräts 110, 120 sein Interesse bekundet hat den Losinhalt 202 kennenzulernen, wird ihm im Schritt 330 der Losinhalt 202 des betreffenden Softwareobjekt-Loses 200 präsentiert. Die Präsentation des Losinhalts 202 wird beispielsweise durch die Computerprogrammcodemittel 207 des Softwareobjekt-Loses 200 ausgeführt, wobei der Losinhalt 202 über die Ausgabemittel 111, 121 der Kommunikationsendgeräte 110, 120 präsentiert wird. In der Figur 2c wird eine mögliche Präsentation des Losinhalts 202 in Form einer visuellen Darstellung des Losinhalts 220 illustriert, das heisst das Softwareobjekt-Los 200 in geöffneter Form visuell dargestellt. Der Fachmann wird verstehen, dass an Stelle einer visuellen Präsentation über die Anzeige 121, respektive den Bildschirm 111, auch andere Präsentationsformen möglich sind, wobei hier insbesondere die akustische Wiedergabe von gesprochenem Text mittels dazu geeigneten elektroakustischen Wandlern und gegebenenfalls mit Sprachsynthesizern erwähnt werden soll. Wie in der Figur 2c illustriert wird, umfasst die visuelle Präsentation des Losinhalts 202 eine visuelle Präsentation der Werbeinformationen 223, beispielsweise in Form von Text- und/oder Bildinformationen, die eventuell animiert werden, und eine visuelle Präsentation der Angaben über den Losgewinn 224. Die visuelle Präsentation der Angaben über den Losgewinn 224 informieren den interessierten Benutzer, ob das betreffende Softwareobjekt-Los ein Gewinnlos ist und gibt gegebenenfalls den dem Los zugeordneten Gewinn an.

Im Schritt 340 wird durch die Computerprogrammcodemittel 207 des Softwareobjekt-Loses 200 überprüft, ob es sich beim betreffenden Softwareobjekt-Los 200 um ein Gewinnlos handelt oder nicht. Wie in der Figur 3 mit dem mit a) bezeichneten gestrichelten Pfeil angedeutet wird, kann das Verfahren für das betreffende Softwareobjekt-Los 200 in einer Ausführungsvariante im Schritt 390 beendet werden, wenn es sich beim betreffenden Softwareobjekt-Los 200 nicht um ein Gewinnlos handelt. Im Schritt 390 kann beispielsweise das oben beschriebene grafische Objekt 210 von den Computerprogrammcodemitteln 207 durch ein anderes grafisches Objekt ersetzt werden, welches beispielsweise ein entwertetes Softwareobjekt-Los symbolisiert. In einer anderen Ausführungsvariante (in der Figur 3 durch den mit b) bezeichneten Pfeil angedeutet) wird das Verfahren im später beschriebenen Schritt 360 weitergefahren, wenn es sich nicht um ein Gewinnlos handelt.

Falls es sich beim betreffenden Softwareobjekt-Los 200 um ein Gewinnlos handelt, kann im Schritt 350 durch die Computerprogrammcodemittel 207 vom Benutzer die Eingabe von bestimmten Benutzerdaten angefordert werden. Eine visuelle Präsentation der Aufforderung zur Eingabe von Benutzerdaten 225 kann beispielsweise durch die Computerprogrammcodemittel 207 in der visuellen Präsentation des Losinhalts 220 dargestellt werden. Der Benutzer kann beispielsweise mittels der Bedienungselemente 112, 122 des betreffenden Kommunikationsendgeräts 110, 120 Daten über ein Eingabefeld für die Eingabe von Benutzerdaten 226 eingeben, welches von den Computerprogrammcodemitteln 207 beispielsweise in der visuellen Präsentation des Losinhalts 220 dargestellt wird. Benutzerdaten umfassen beispielsweise Angaben, die es ermöglichen den betreffenden Benutzer zu identifizieren und/oder für die Zustellung des Losgewinns zu adressieren, wobei die Adressinformationen je nach der Art des Gewinns eine elektronische Adresse oder eine herkömmliche Postadresse umfassen. An dieser Stelle sollte erwähnt werden, dass sich die Angaben von elektronischen Adressinformation durch den Benutzer beispielsweise erübrigt, wenn die Übermittlung an die Dienstzentrale 140 per E-Mail erfolgt, oder wenn benutzerspezifische Daten, beispielsweise eine Benutzeridentifizierung, von den Computerprogrammcodemitteln 207 in einem Speichermittel des betreffenden Kommunikationsendgeräts 110, 120 gelesen werden, beispielsweise eine IMSI (International Mobile Subscriber Identity) auf einer entfernbar mit dem Kommunikationsendgerät 110 verbundenen Chipkarte 123, beispielsweise eine SIM-Karte (Subscriber Identification Module).

In einer Ausführungsvariante wird der Benutzer im Schritt 350 zudem aufgefordert eine Kontrollfrage zu beantworten, wobei diese Kontrollfrage sich beispielsweise auf den Inhalt der präsentierten Werbeinformationen 223 bezieht. Gemäss dieser Ausführungsvariante können im gestrichelt dargestellten Schritt 355 die vom Benutzer eingegebenen Benutzerdaten, insbesondere die auf die Kontrollfrage eingegebene Antwort, mit vordefinierten Daten 205 verglichen werden, die im Softwareobjekt-Los abgespeichert sind und beispielsweise der erwarteten korrekten Antwort entsprechen. Falls die eingegebenen Benutzerdaten nicht mit den vordefinierten Daten 205 übereinstimmen, das heisst, beispielsweise, falls die eingegebene Antwort nicht der vordefinierten korrekten Antwort entspricht, kann das Verfahren für das betreffende Softwareobjekt-Los 200, wie oben erwähnt, im Schritt 390 beendet werden (mit a) bezeichneter gestrichelter Pfeil), oder es kann im Schritt 360 fortgeführt werden.

Im Schritt 360 wird von den Computerprogrammcodemitteln 207 des Softwareobjekt-Loses 200 ein Einlösebeleg zur Übermittlung an die Dienstzentrale 140 vorbereitet. Ein solcher Einlösebeleg umfasst mindestens die Losidentifizierung 201 des betreffenden Softwareobjekt-Loses 200 und kann, wie oben erwähnt und in der Figur 3 durch den mit b) bezeichneten Pfeil angedeutet, auch dann vorbereitet werden, wenn es sich beim betreffenden Softwareobjekt-Los 200 nicht um ein Gewinnlos handelt. Der Einlösebeleg umfasst auch mindestens gewisse der im Schritt 350 vom Benutzer eingegebenen Benutzerdaten, beispielsweise die oben erwähnten Adressinformationen und/oder die vom Benutzer eingegebene Antwort auf die gestellte Kontrollfrage, wenn diese Antwort erst in der Dienstzentrale 140 überprüft wird. Falls eine im Schritt 350 gestellte Kontrollfrage vom Benutzer beantwortet und im Schritt 355 als korrekte Antwort beurteilt wurde, kann der Einlösebeleg auch eine diesbezügliche Angabe umfassen.

An Stelle eines Einlösebelegs kann vom Benutzer in einer alternativen Variante, insbesondere wenn Softwareobjekt-Lose 200 von der Dienstzentrale 140 mittels E-Mail verfügbar gemacht werden, das Gewinnlos, beispielsweise mittels E-Mail, zum Bezug des zustehenden Gewinns an die Dienstzentrale 140 übermittelt werden.

Im Schritt 370, der beispielsweise vom Benutzer durch Betätigen eines grafischen Bedienungselementes 222 eingeleitet wird, wird der vorbereitete Einlösebeleg von den Computerprogrammcodemitteln 207 des Softwareobjekt-Loses 200 unter Zuhilfenahme von Kommunikationsfunktionen des betreffenden Kommunikationsendgeräts 110, 120 über das Telekommunikationsnetz 130 an die Dienstzentrale 140 übermittelt, wobei dafür die oben erwähnten im Softwareobjekt-Los gespeicherten Angaben 206 mit Adressinformationen der Dienstzentrale 140 verwendet werden.

Im Schritt 380 wird durch die Computerprogrammcodemittel 141 der Dienstzentrale 140 auf Grund des empfangenen Einlösebelegs eine Gewinnzuweisung ausgeführt, wobei bei der Übermittlung eines Einlösebelegs für ein nicht gewinnendes Los oder bei einem Einlösebeleg im Fall einer inkorrekt beantworteten Kontrollfrage (in der Figur 3 durch den mit b) bezeichneten Pfeil angedeutet) keine eigentliche Zuweisung eines Gewinns durchgeführt wird, sondern in der Datenbank 143 für statistische Auswertungen nachgeführt wird, wie oft ein bestimmter Werbeinhalt von Benutzern beachtet wird, das heisst Softwareobjekt-Lose 200 mit dem betreffenden Werbeinhalt geöffnet werden. Bei der Gewinnzuweisung für ein Gewinnlos wird mindestens die Verknüpfung von Angaben über den zustehenden Gewinn und von Benutzerdaten, die den betreffenden Benutzer identifizieren und/oder erlauben diesen zu adressieren, in der Datenbank 143 abgespeichert und/oder an einen für die Zustellung des Gewinns verantwortlichen Dienstanbieter übermittelt. Es ist auch möglich in der Dienstzentrale 140, beispielsweise in der Datenbank 143, nachzuführen wie oft ein bestimmter Benutzer ein Gewinnlos, respektive einen Einlösebeleg, an die Dienstzentrale übermittelt. In Abhängigkeit der Höhe der Gewinne, kann es auch sinnvoll sein, für einen bestimmten Benutzer die Anzahl berechtigter Gewinnbezüge zu begrenzen, beispielsweise kann ein bestimmter Benutzer berechtigt sein pro Monat einen Gewinn zu beziehen. In der Datenbank 143 können für Benutzer auch Gewinnkonti geführt werden, in welchen Gewinnkonti jeweils für einen bestimmten Benutzer die ihm zugewiesenen Gewinne gutgeschrieben werden. Die Gewinne können beispielsweise mittels beschreibenden Daten oder in Form von äquivalenten Bonuspunkten oder Geldbeträgen auf einem Gewinnkonto gutgeschrieben werden, so dass ein Benutzer die ihm zugewiesenen Gewinne auf seinem Gewinnkonto akkumulieren und beispielsweise zu einem von ihm bestimmten Zeitpunkt einlösen oder zur Bezahlung seiner Telekommunikationsgebühren verwenden lassen kann.

Wie oben bereits erwähnt wurde wird der Fachmann verstehen, dass es verschiedene Möglichkeiten gibt die Abfolge der Generierung, Verfügbarmachung, Anforderung, Übermittlung und Einlösung von Softwareobjekt-Losen auszuführen und die Ausführung auf Prozessoren der Kommunikationsendgeräte 110, 120 und der Dienstzentrale 140 zu verteilen, ohne dabei von der Lehre der vorliegenden Erfindung abzuweichen.

### Liste der Bezugszeichen

- 110: Kommunikationsendgerät (Personal Computer)
- 111: Ausgabemittel (Bildschirm)
- 112: Eingabemittel (Tastatur, Keyboard)
- 120: Kommunikationsendgerät (Mobilfunktelefon)
- 121: Ausgabemittel (Anzeige, Display)
- 122: Eingabemittel (Tastatur, Keyboard)
- 123: Chipkarte (SIM-Karte)
- 130: Telekommunikationsnetz
- 140: Dienstzentrale
- 141: Computerprogrammcodemittel
- 142: Prozessor
- 143: Datenbank
- 200: Softwareobjekt-Los
- 201: Losidentifizierung
- 202: Losinhalt
- 203: Werbeinformationen
- 204: Angaben über Losgewinn
- 205: vordefinierte Daten
- 206: Angaben über Dienstzentrale
- 207: Computerprogrammcodemittel
- 210: visuelle Präsentation eines verfügbaren (ungeöffneten) Softwareobjekt-Loses
- 211: Instruktionen zum Umgang mit dem Softwareobjekt-Los
- 212: grafisches Bedienungselement
- 220: visuelle Präsentation des Losinhalts (geöffnetes Softwareobjekt-Los)
- 222: grafisches Bedienungselement
- 223: visuelle Präsentation der Werbeinformationen
- 224: visuelle Präsentation der Angaben über Losgewinn
- 225: visuelle Präsentation der Aufforderung zur Eingabe von Benutzerdaten
- 226: Eingabefeld für die Eingabe von Benutzerdaten
- 300: Generieren von Softwareobjekt-Losen
- 310: Verfügbarmachen von Softwareobjekt-Losen
- 320: Interessensbekundung eines Benutzers
- 330: Präsentation des Losinhalts
- 340: Überprüfen ob es sich um ein Gewinnlos handelt
- 350: Aufforderung und Eingabe von Benutzerdaten
- 355: Überprüfen der Antwort auf eine Kontrollfrage
- 360: Vorbereiten eines (Einlöse-) Belegs
- 370: Übermitteln des (Einlöse-) Belegs an eine Dienstzentrale
- 380: Gewinnzuweisung
- 390: Ende

## Patentansprüche

1. Verfahren für die Verbreitung von Werbeinformationen über Telekommunikationsnetze (130), welches Verfahren folgende Schritte umfasst:
- Verfügbarmachen von Softwareobjekt-Losen (200), welche mindestens eine eindeutige Losidentifizierung (201) und einen dieser Losidentifizierung (201) zugeordneten Losinhalt (202) umfassen, über ein Telekommunikationsnetz (130) und über mit dem Telekommunikationsnetz (130) verbundene Kommunikationsendgeräte (110, 120) für mindestens gewisse Benutzer dieser Kommunikationsendgeräte (110, 120),
- Interessensbekundung, durch solche Benutzer sich den Losinhalt (202) eines ihnen verfügbaren Softwareobjekt-Loses (200) präsentieren zu lassen, wobei die Interessensbekundung von solchen Benutzern mittels Eingabemitteln (112, 122) eines dieser Kommunikationsendgeräte (110, 120) eingegeben wird,
- Präsentation des Losinhalts (202) des Softwareobjekt-Loses (200) mittels Ausgabemitteln (111, 121) des für die Interessensbekundung benützten Kommunikationsendgeräts (110, 120), wobei der Losinhalt (202) mindestens Werbeinformationen (203) und Angaben über einen Losgewinn (204) umfasst.

2. Verfahren gemäss Anspruch 1, dadurch gekennzeichnet, dass es zusätzlich folgende Schritte umfasst:
- Ausgeben einer Aufforderung, mittels der Ausgabemittel (111, 121) an jeweils einen der interessierten Benutzer bestimmte Benutzerdaten einzugeben, und
- Entgegennehmen von vom betreffenden Benutzer mittels der Eingabemittel (112, 122) eingegebenen Benutzerdaten.

3. Verfahren gemäss einem der Ansprüche 1 oder 2, dadurch gekennzeichnet, dass es zusätzlich folgende Schritte umfasst:
- Generieren von Einlösebelegen, die jeweils mindestens die Losidentifizierung (201) des betreffenden Softwareobjekt-Loses (200) enthalten, und
- Übermitteln der Einlösebelege über das Telekommunikationsnetz (130) an eine im betreffenden Softwareobjekt-Los (200) spezifizierte Dienstzentrale (140).

4. Verfahren gemäss Anspruch 3, dadurch gekennzeichnet, dass beim Generieren von Einlösebelegen mindestens gewisse Benutzerdaten in den Einlösebeleg eingefügt werden.

5. Verfahren gemäss einem der Ansprüche 2 bis 4, dadurch gekennzeichnet, dass nach dem Entgegennehmen von Benutzerdaten mindestens gewisse der entgegengenommenen Benutzerdaten mit Daten (205) verglichen werden, die im Softwareobjekt-Los (200) enthalten sind.

6. Verfahren gemäss einem der Ansprüche 3 bis 5, dadurch gekennzeichnet, dass die Dienstzentrale (140) auf Grund eines empfangenen Einlösebelegs eine Gewinnzuweisung an einen Benutzer vornimmt, wobei dieser Benutzer durch die Dienstzentrale (140) auf Grund von Angaben bestimmt wird, die in den im Einlösebeleg übermittelten Benutzerdaten enthalten sind.

7. Softwareobjekt-Los (200), das so beschaffen ist, dass es über ein Telekommunikationsnetz (130) mindestens gewissen Benutzern von Kommunikationsendgeräten (110, 120) über diese Kommunikationsendgeräte (110, 120) verfügbar gemacht werden kann, umfassend:
- mindestens eine eindeutige Losidentifizierung (201) und einen dieser Losidentifizierung (201) zugeordneten Losinhalt (202), wobei der Losinhalt (202) mindestens Werbeinformationen (203) und Angaben über einen Losgewinn (204) umfasst, und
- Computerprogrammcodemittel (207), um einen Prozessor in einem der Kommunikationsendgeräte (110, 120) so zu steuern, dass er den Losinhalt (202) dem Benutzer des Kommunikationsendgeräts (110, 120) mittels Ausgabemitteln (111, 121) des Kommunikationsendgeräts (110, 120) präsentiert, wenn der Benutzer mittels Eingabemitteln (112, 122) des Kommunikationsendgeräts (110, 120) Interesse bekundet hat, sich den Losinhalt (202) des Softwareobjekt-Loses (200) präsentieren zu lassen.

8. Softwareobjekt-Los (200) gemäss Anspruch 7, dadurch gekennzeichnet, dass es Computerprogrammcodemittel (207) umfasst, um den Prozessor im Kommunikationsendgerät (110, 120), so zu steuern, dass er den Benutzer mittels der Ausgabemittel (111, 121) auffordert, bestimmte Benutzerdaten einzugeben, und dass er vom Benutzer mittels der Eingabemittel (111, 121) eingegebene Benutzerdaten entgegennimmt.

9. Softwareobjekt-Los (200) gemäss einem der Ansprüche 7 oder 8, dadurch gekennzeichnet, dass es Computerprogrammcodemittel (207) umfasst, um den Prozessor im Kommunikationsendgerät (110, 120) so zu steuern, dass er einen Einlösebeleg generiert, der mindestens die Losidentifizierung (201) umfasst, und dass er den Einlösebeleg über das Telekommunikationsnetz (130) an eine im Softwareobjekt-Los (200) spezifizierte Dienstzentrale (140) übermittelt.

10. Softwareobjekt-Los (200) gemäss Anspruch 9, dadurch gekennzeichnet, dass es Computerprogrammcodemittel (207) umfasst, um den Prozessor im Kommunikationsendgerät (110, 120), so zu steuern, dass er beim Generieren des Einlösebelegs mindestens gewisse Benutzerdaten in den Einlösebeleg einfügt.

11. Softwareobjekt-Los (200) gemäss einem Ansprüche 8 bis 10, dadurch gekennzeichnet, dass es Computerprogrammcodemittel (207) umfasst, um den Prozessor im Kommunikationsendgerät (110, 120), so zu steuern, dass er entgegengenommene Benutzerdaten mit Daten (205) vergleicht, die im Softwareobjekt-Los (200) enthalten sind.

12. Dienstzentrale (140), die mit einem Telekommunikationsnetz (130) verbunden ist und so eingerichtet ist, das sie über dieses Telekommunikationsnetz (130) mit Kommunikationsendgeräten (110, 120) kommunizieren kann, welche Dienstzentrale (140) Computerprogrammcodemittel (207) umfasst, um einen Prozessor der Dienstzentrale (140), so zu steuern, dass er Softwareobjekt-Lose (200) gemäss einem der Ansprüche 7 bis 11 generiert, und dass er Softwareobjekt-Lose (200) über das Telekommunikationsnetz (130) und über die Kommunikationsendgeräte (110, 120) für Benutzer dieser Kommunikationsendgeräte (110, 120) verfügbar macht.

13. Dienstzentrale (140) gemäss Anspruch 12, dadurch gekennzeichnet, dass sie auf Grund von Einlösebelegen, die sie über das Telekommunikationsnetz (130) von den Kommunikationsendgeräten (110, 120) entgegengenommen hat, eine Gewinnzuweisung an einen der Benutzer vornimmt, wobei dieser Benutzer durch die Dienstzentrale (140) auf Grund von Angaben bestimmt wird, die im Einlösebeleg enthalten sind.
